# FASCICULE DE BREVET EUROPEEN

(11) **EP 2 634 877 B1**
(45) Date de publication et mention de la délivrance du brevet: **03.06.2015**
(21) Numéro de dépôt: 12305241.7
(22) Date de dépôt: 28.02.2012
(51) Int. Cl.: H02G 3/08

(54) **Procédé de fabrication d'un boitier de commande pour pompe de circulation**
Herstellungsverfahren eines Schaltkastens für eine Umwälzpumpe
Method for manufacturing a control housing for a circulation pump

(43) Date de publication de la demande: 04.09.2013
(73) Titulaire: Pompes Salmson, 78400 Chatou (FR)
(72) Inventeur: Leze, Adrien, 53000 Laval (FR); Bouilly, Hervé, 53940 Le Genest St. Isle (FR); Dejean, Philippe, 53960 Bonchamp (FR); Guillet, Donald, 53960 Bonchamp (FR); Pottier, Xavier, 53970 Montigne le Brillant (FR)
(74) Mandataire: Hirsch & Associés

(56) Documents cités:
- EP-A1- 1 810 810
- DE-A1- 3 435 289
- GB-A- 2 412 794
- US-A1- 2006 019 516

## Description

La présente invention concerne un procédé de fabrication d'un boîtier de commande pour une pompe de circulation, un tel boîtier de commande pour pompe de circulation et une pompe de circulation comprenant un tel boîtier de commande.

Un boîtier de commande pour pompe de circulation est un boîtier, classiquement réalisé en plastique à l'intérieur duquel est fixée une carte électronique de commande du moteur de la pompe. Une telle pompe est par exemple mise en oeuvre dans les installations de chauffage, pour faire circuler le fluide chaud. Le boîtier est muni de contacts électriques qui s'étendent de part et d'autre de la paroi du boîtier pour assurer l'alimentation électrique de la pompe, via la carte électronique de commande.

Il est connu de réaliser le fond du boîtier de commande par surmoulage des contacts, qui font saillie de part et d'autre de la paroi du boîtier.

Il est également connu, de réaliser le fond du boîtier par deux surmoulages successifs. Le premier surmoulage d'un premier jeu de contacts permet de former, autour de ce premier jeu de contacts, une barre de maintien. La barre de maintien maintient ensuite en position le premier jeu de contacts et le protège, pendant la deuxième opération de surmoulage. Cette deuxième opération de surmoulage est réalisée autour de la barre de maintien. La deuxième opération de surmoulage permet de former le fond du boîtier. Cette deuxième opération de surmoulage peut, en outre, être réalisée autour d'un deuxième jeu de contacts distincts du premier jeu de contacts, de sorte que le deuxième jeu de contacts est directement surmoulé dans le fond du boîtier, alors que le premier jeu de contacts est indirectement surmoulé dans le fond du boitier.

Le document US2006/019516 divulgue un procédé de fabrication d'un boîtier de commande, comprenant l'étape de réalisation d'un support sur lequel un premier et un deuxième jeu de contacts électriques est fixé. Les contacts électriques sont insérés dans le support et un tube d'ajustement du support est ajusté sur le corps principal.

Le document DE3435289 divulgue une boîte de raccordement pour le montage direct sur l'extérieur d'un carter de moteur de pompe. La boîte de raccordement comprend un ensemble de broches.

Les procédés de fabrication décrits dans ce document sont ainsi très rapides.

L'invention vise cependant à proposer un procédé de fabrication d'un boîtier de commande pour pompe de circulation présentant une précision accrue du positionnement des contacts les uns par rapport aux autres pour faciliter la fixation de la carte électronique de commande à l'intérieur du boîtier de commande.

A cette fin l'invention propose un procédé de fabrication d'un boîtier de commande pour pompe de circulation, notamment pour pompe de circulation à moteur synchrone, comprenant les étapes de :
a) Réalisation d'une pièce enveloppe sur laquelle un premier jeu de contacts électriques est fixé et un deuxième jeu de contacts électriques est pré-positionné ; et
b) Fixation du deuxième jeu de contacts électriques par rapport à la pièce enveloppe par surmoulage.

Selon des modes de réalisation préférés, le procédé selon l'invention présente une ou plusieurs des caractéristiques suivantes, prises seules ou en combinaison :
- la pièce enveloppe est réalisée par surmoulage du premier jeu de contacts électriques ;
- la pièce enveloppe obtenue par surmoulage du premier jeu de contacts électriques comprend des logements adaptés à recevoir le deuxième jeu de contacts électriques ;
- après la formation de la pièce enveloppe, une pièce de support comportant des logements adaptés à recevoir le deuxième jeu de contacts électriques est formée dans la pièce enveloppe, notamment par moulage ;
- après la formation de la pièce enveloppe, une pièce de support comportant des logements adaptés à recevoir le deuxième jeu de contacts est disposée dans la pièce enveloppe ;
- la pièce enveloppe est réalisée par mise en place du premier jeu de contacts électriques dans une pièce support et surmoulage de la pièce support pour fixer le premier jeu de contacts électriques par rapport à la pièce support ;
- la pièce support comprend des logements adaptés à recevoir le deuxième jeu de contacts électriques ; et
- le procédé comprend en outre une étape de mise en place relativement aux premier et deuxième jeux de contacts électriques, d'un troisième jeu de contacts électriques dans la pièce enveloppe, et surmoulage du troisième jeu de contacts électriques pour fixer le troisième jeu de contacts électriques par rapport à la pièce enveloppe.

L'invention se rapporte également à un procédé de fabrication d'une pompe de circulation comprenant les étapes de :
- fabrication d'un boîtier de commande par mise en oeuvre d'un procédé tel que décrit ci-avant dans toutes ses combinaisons ;
- fixation d'une carte électronique de commande dans le boîtier, la carte électronique de commande étant en contact électriquement conducteur avec au moins l'un des jeux de contacts électriques ; et
- fixation du boîtier sur une partie de la pompe de circulation.

L'invention vise également un boîtier de commande pour pompe de circulation, notamment pour pompe de circulation à moteur synchrone, fabriqué selon procédé décrit ci-avant dans toutes ses combinaisons.

L'invention concerne aussi une pompe de circulation à moteur synchrone comprenant un moteur synchrone et un boîtier de commande du moteur synchrone tel que décrit ci-avant.

Selon une alternative, la carte électronique de commande est fixée sur les contacts électriques par emmanchement en force des contacts électriques dans des trous percés dans la carte électronique de commande.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente un premier jeu de contacts.
La figure 2 représente une pièce enveloppe de boîtier de commande surmoulée autour du jeu de contacts de la figure 1.
La figure 3 représente un deuxième jeu de contacts.
La figure 4 représente le deuxième jeu de contacts mis en place dans la pièce enveloppe de la figure 2.
La figure 5 représente le surmoulage du deuxième jeu de contacts dans la pièce enveloppe.
La figure 6 représente une pièce support sur laquelle est fixé un premier jeu de contacts.
La figure 7 représente la pièce enveloppe réalisée par surmoulage de la pièce support de la figure 6.
La figure 8 représente un deuxième jeu de contacts mis en place dans la pièce enveloppe de la figure 7.
La figure 9 représente le surmoulage réalisé autour du deuxième jeu de contacts dans la pièce enveloppe.

Dans la suite de la description, les éléments identiques ou de fonction identique portent le même signe de référence. Ces éléments ne sont pas décrits en regard des deux variantes de procédés, sauf pour expliquer les éventuelles différences entre les deux variantes de procédé.

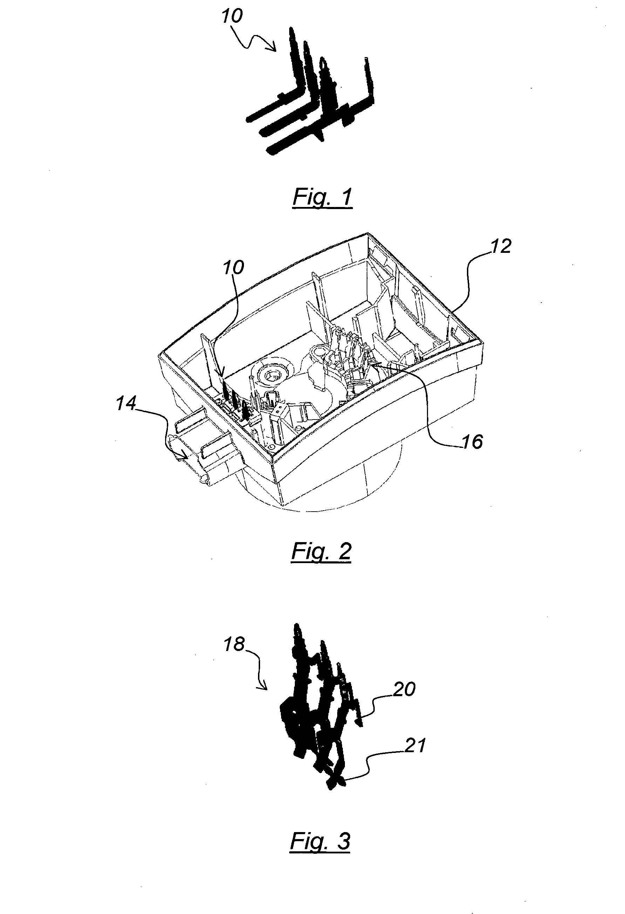

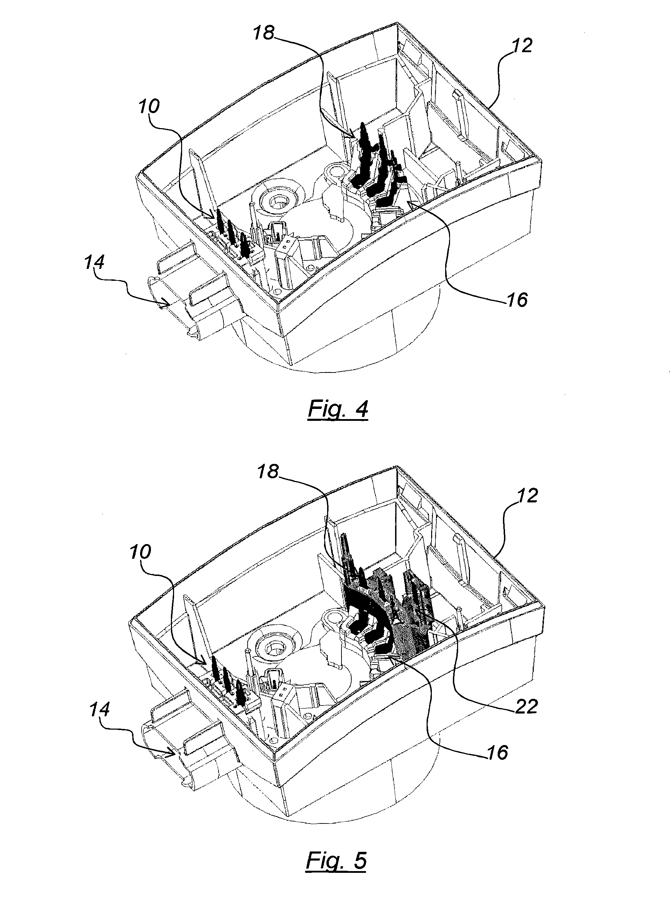

Un premier exemple de procédé de réalisation d'un boîtier de commande pour pompe de circulation, notamment pour pompe de circulation à moteur synchrone, est tout d'abord décrit en regard des figures 1 à 5.

Initialement, on dispose d'un jeu de contacts électriques 10. En l'espèce, les contacts électriques ont une forme de L, sans que cette géométrie soit limitative. Ces contacts électriques sont plus spécialement destinés à permettre l'alimentation électrique de la pompe et des autres consommateurs électriques éventuels.

Selon une première étape, illustrée par la figure 2, on surmoule le premier jeu de contacts électriques 10 pour former une pièce enveloppe 12. La pièce enveloppe s'entend d'une pièce formant au moins en partie le boîtier de commande. De préférence, cette pièce enveloppe forme au moins une surface de ce boîtier ou fond du boîtier. En l'espèce, la pièce enveloppe forme quatre ou cinq surfaces du boîtier de commande, de sorte qu'un espace est créé à l'intérieur de la pièce enveloppe. Cet espace est adapté à recevoir une carte électronique de commande. Une autre surface du boîtier peut par exemple être réalisée par un couvercle détachable, non représenté.

Tel qu'illustré par la figure 2, le surmoulage du premier jeu de contacts 10 permet de former une prise 14 destinée à recevoir une prise conjuguée pour alimenter la pompe en courant.

Ce surmoulage permet encore de réaliser un logement 16 adapté à recevoir un deuxième jeu de contacts électriques 18 illustré sur la figure 3. Le deuxième jeu de contacts électriques est plus particulièrement destinée à réaliser le contact électrique entre une carte électronique de commande et le moteur de la pompe, de sorte que la carte électronique de commande permet de commander le moteur de la pompe et donc également la pompe.

Par suite, le logement 16 présente des trous traversant la pièce enveloppe 12, de sorte que les contacts du deuxième jeu de contacts 18 font saillie hors de la pièce enveloppe 12, du côté opposée à l'espace adapté à recevoir la carte électronique de commande.

La mise en place du deuxième jeu de contacts 18 peut comprendre le clipage des contacts électriques dans le logement 16. En l'espèce, les contacts électriques du deuxième jeu de contacts électriques 18 forment également deux pinces 20, 21 (cf. figure 3) qui, lors de la mise en place du deuxième jeu de contacts électriques 18 dans le logement 16, viennent se clipper sur une paroi du logement 16 ou dans le logement 16. Une mise en place précise du deuxième jeu de contacts électriques 18 dans la pièce enveloppe 12 est ainsi assurée.

Ainsi, à la fin de cette étape, une pièce enveloppe 12 est réalisée, sur laquelle est fixé le premier jeu de contacts électriques 10 alors que le deuxième jeu de contacts électriques 18 est pré-positionné, mais peut encore être détaché.

La fabrication du boîtier de commande se poursuit alors par le surmoulage du deuxième jeu de contacts électriques 18, de manière à former un chapeau 22, qui permet d'immobiliser le deuxième jeu de contacts électriques 18 par rapport à la pièce enveloppe 12.

Cette façon de procéder permet notamment de positionner le deuxième jeu de contacts électriques 18 en fonction du positionnement, arrêté, du premier jeu de contacts électriques 10. Il est ainsi possible de positionner précisément ces deux jeux de contacts électriques l'un par rapport à l'autre, afin d'améliorer le montage ultérieur d'une carte électronique de commande à l'intérieur du boîtier.

Cette façon de procéder permet également de fixer le deuxième jeu de contacts électriques 18 au cours d'une opération de surmoulage de volume réduit, inférieur au volume nécessaire à la formation de la pièce enveloppe, notamment. Ce surmoulage de volume réduit permet d'assurer un positionnement précis du deuxième jeu de contacts. En effet, il a été constaté que les défauts de positionnement lors des étapes de surmoulage sont proportionnels aux volumes moulés ou surmoulés, c'est-à-dire proportionnels aux dimensions des pièces réalisées durant ces opérations. De même, les déformations des pièces plastiques, notamment dues au phénomène de retrait du plastique lors du moulage, sont proportionnelles aux dimensions de la pièce moulées.

Bien entendu, dans le cas où le boîtier de commande doit être muni d'un plus grand nombre de contacts électriques, les étapes de mise en place d'un jeu de contacts électriques et leur surmoulage pour les fixer peuvent être répétées, autant de fois que nécessaire. Il est également possible de former le logement pour un jeu de contacts électriques ultérieurs au cours de l'opération de surmoulage d'un jeu de contacts électriques antérieurs. Ceci permet de réaliser des opérations de surmoulage de petites dimensions, qui sont plus précises. En outre, ceci permet de positionner précisément le jeu de contacts électriques ultérieurs en fonction de la position, déterminée par le surmoulage, du jeu de contacts électriques antérieurs. Il est également possible de positionner une pièce support dans la pièce enveloppe, après le surmoulage du deuxième jeu de contacts électriques, de prépositionner le troisième jeu de contacts électriques dans des logements de cette pièce support et de les fixer lors d'une opération de surmoulage, fixant ainsi la position des différents jeux de contacts électriques les uns par rapport aux autres.

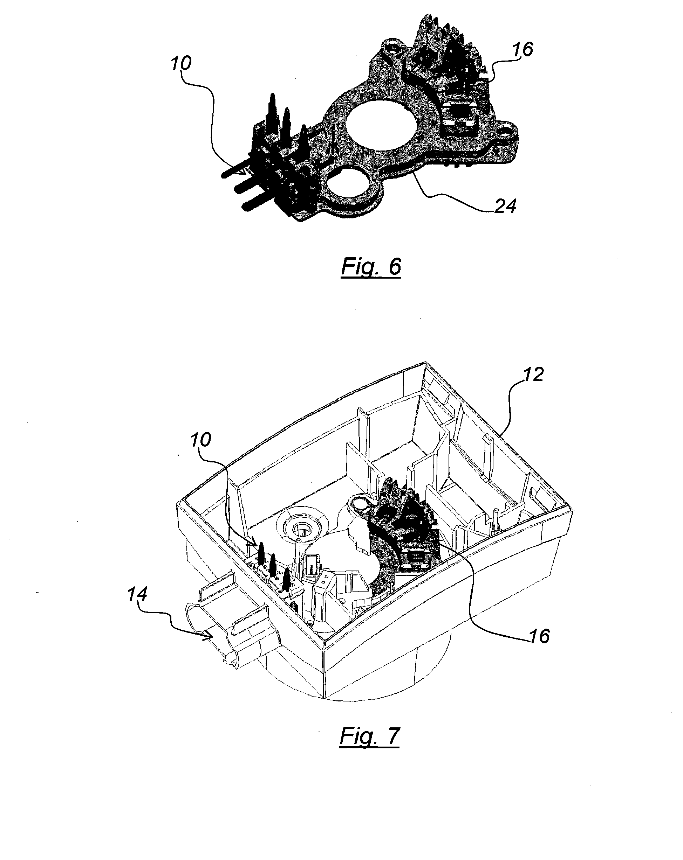

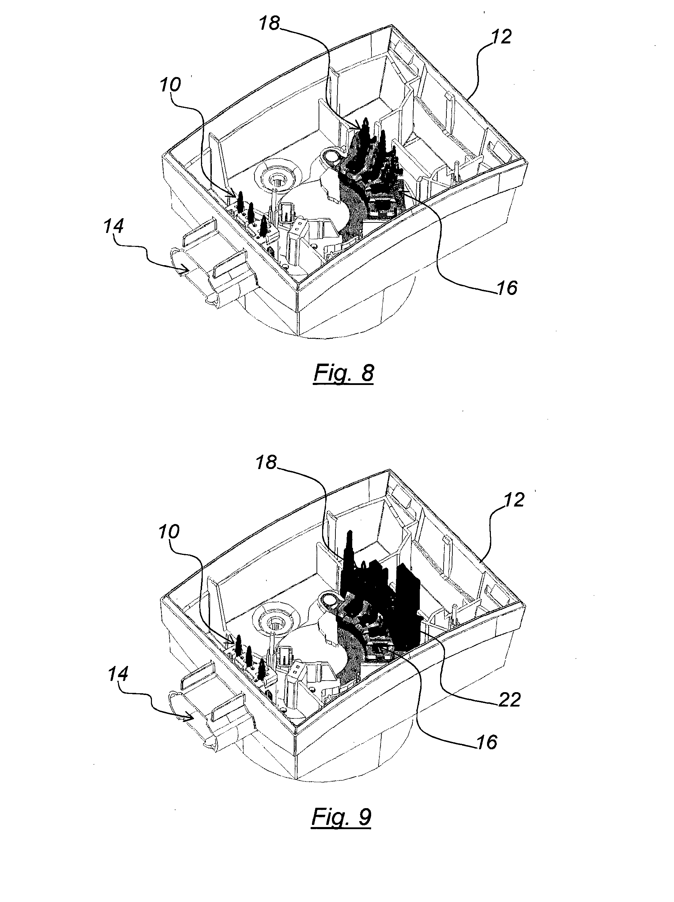

Un second exemple de procédé de fabrication d'un boîtier de commande pour pompe de circulation, notamment pour pompe de circulation à moteur synchrone, est décrit ci-après en regard des figures 6 à 9.

Selon ce second exemple de procédé, on réalise tout d'abord une pièce support 24 pour des contacts électriques 10. Cette pièce support peut être réalisée par moulage, un premier jeu de contacts électriques étant ensuite fixé sur la pièce support 24. La pièce support 24 peut également être réalisée par surmoulage d'un premier jeu de contacts électriques 10. Cette pièce support 24 présente des dimensions inférieures aux dimensions du boîtier final. La pièce de support 24 peut ainsi être réalisée de manière précise. En effet, comme indiqué précédemment, les erreurs de positionnement et les déformations d'une pièce plastique durant une opération de moulage sont proportionnelles aux dimensions de la pièce moulées. Il est donc particulièrement intéressant pour obtenir un positionnement précis des contacts électriques de réaliser le boîtier de commande - ou tout du moins de fixer les contacts sur le boîtier de commande - par des opérations de moulage ou surmoulage successives et de dimensions réduites, plutôt que de procéder par une opération unique.

En l'espèce, la pièce de support 24 présente un logement 16 adapté à recevoir un deuxième jeu de contacts électriques 18. En variante, le logement 16 peut également être moulé ultérieurement, notamment surmoulé sur la pièce support 24, dans la pièce enveloppe 18.

La fabrication du boîtier de commande se poursuit par le surmoulage de la pièce enveloppe 12 autour de la pièce support 24.

Un deuxième jeu de contacts électriques 18 est alors mis en place dans le logement 16. Un chapeau 22 est alors surmoulé, autour du deuxième jeu de contacts électriques 18, de sorte que ce deuxième jeu de contacts électriques est fixés par rapport à la pièce enveloppe 12 et donc, également, par rapport au premier jeu de contacts électriques 10.

Dans les deux exemples décrits ci-avant, le boîtier de commande est muni de six contacts électriques. Ce nombre peut évidemment être supérieur, notamment en fonction du type de moteur et du nombre d'options et de fonctions adressées par la carte électronique de commande. Ces options et fonctions peuvent notamment comporter des fonctions d'usage, de réglage et de confort.

Dans les deux cas, le procédé peut ensuite être complété par la fixation d'une carte électronique de commande dans le boîtier, la carte électronique de commande étant en contact électriquement conducteur avec les contacts électriques. Ceci est avantageusement réalisé en ménageant des trous dans la carte électronique de commande et en utilisant des contacts électriques adaptés à être emmanchés en force dans les trous ménagés, notamment percés, dans la carte électronique de commande. Les contacts électriques peuvent notamment être du type « pressfit ».

Le boîtier peut ensuite être fixé sur une partie d'une pompe de circulation, de manière classique et connue de l'homme de l'art.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de fabrication d'un boîtier de commande pour pompe de circulation, notamment pour pompe de circulation à moteur synchrone, comprenant les étapes de :
a) Réalisation d'une pièce enveloppe (12) sur laquelle un premier jeu de contacts électriques (10) est fixé et un deuxième jeu de contacts électriques (18) est pré-positionné ;
b) Fixation du deuxième jeu de contacts électriques (18) par rapport à la pièce enveloppe (12) par surmoulage.

2. Procédé selon la revendication 1, dans lequel la pièce enveloppe (12) est réalisée par surmoulage du premier jeu de contacts électriques (10).

3. Procédé selon la revendication 2, dans lequel la pièce enveloppe (12) obtenue par surmoulage du premier jeu de contacts électriques (10) comprend des logements (16) adaptés à recevoir le deuxième jeu de contacts électriques (18).

4. Procédé selon la revendication 2 ou 3, dans lequel après la formation de la pièce enveloppe (12), une pièce de support (24) comportant des logements (16) adaptés à recevoir le deuxième jeu de contacts électriques (18) est formée dans la pièce enveloppe (12), notamment par moulage.

5. Procédé selon la revendication 2 ou 3, dans lequel après la formation de la pièce enveloppe, une pièce de support (24) comportant des logements (16) adaptés à recevoir le deuxième jeu de contacts (18) est disposée dans la pièce enveloppe (12).

6. Procédé selon la revendication 1, dans lequel la pièce enveloppe (12) est réalisée par mise en place du premier jeu de contacts électriques (10) dans une pièce support (24) et surmoulage de la pièce support (24) pour fixer le premier jeu de contacts électriques (10) par rapport à la pièce support.

7. Procédé selon la revendication 6, dans lequel la pièce support (24) comprend des logements (16) adaptés à recevoir le deuxième jeu de contacts électriques (18).

8. Procédé selon l'une quelconque des revendications précédentes, comprenant en outre une étape de mise en place relativement aux premier et deuxième jeux de contacts électriques (10 ; 18), d'un troisième jeu de contacts électriques dans la pièce enveloppe (12), et surmoulage du troisième jeu de contacts électriques pour fixer le troisième jeu de contacts électriques par rapport à la pièce enveloppe (12).

9. Procédé de fabrication d'une pompe de circulation comprenant les étapes de :
- fabrication d'un boîtier de commande par mise en oeuvre d'un procédé selon l'une quelconque des revendications précédente ; et
- fixation d'une carte électronique de commande dans le boîtier, la carte électronique de commande étant en contact électriquement conducteur avec au moins l'un des jeux de contacts électriques (10 ; 18) ; et
- fixation du boîtier sur une partie de la pompe de circulation.

10. Boîtier de commande pour pompe de circulation, notamment pour pompe de circulation à moteur synchrone, fabriqué selon l'une quelconque des revendications 1 à 8.

11. Pompe de circulation à moteur synchrone comprenant un moteur synchrone et un boîtier de commande du moteur synchrone selon la revendication 10.

12. Pompe de circulation selon la revendication 11, dans laquelle la carte électronique de commande est fixée sur les contacts électriques (10 ; 18) par emmanchement en force des contacts électriques (10 ; 18) dans des trous percés dans la carte électronique de commande.

## Patentansprüche

1. Verfahren zum Herstellen eines Steuergeräts für eine Umwälzpumpe, insbesondere für eine Umwälzpumpe mit Synchronmotor, umfassend die Schritte des:
a) Erstellens eines Gehäuseteils (12), auf dem ein erster Satz elektrischer Kontakte (10) befestigt wird und ein zweiter Satz elektrischer Kontakte (18) vorpositioniert wird;
b) Befestigens des zweiten Satzes elektrischer Kontakte (18) an dem Gehäuseteil (12) durch Überformen.

2. Verfahren nach Anspruch 1, wobei das Gehäuseteil (12) durch Überformen des ersten Satzes elektrischer Kontakte (10) erstellt wird.

3. Verfahren nach Anspruch 2, wobei das Gehäuseteil (12), das durch Überformen des ersten Satzes elektrischer Kontakte (10) erstellt wird, Ausnehmungen (16) aufweist, die geeignet sind, den zweiten Satz elektrischer Kontakte (18) aufzunehmen.

4. Verfahren nach Anspruch 2 oder 3, wobei nach dem Bilden des Gehäuseteils (12) ein Stützteil (24) in dem Gehäuseteil (12) insbesondere durch Formgießen gebildet wird, das Ausnehmungen (16) aufweist, die geeignet sind, den zweiten Satz elektrischer Kontakte (18) aufzunehmen.

5. Verfahren nach Anspruch 2 oder 3, wobei nach dem Bilden des Gehäuseteils ein Stützteil (24) in dem Gehäuseteil (12) angeordnet wird, das Ausnehmungen (16) aufweist, die geeignet sind, den zweiten Satz Kontakte (18) aufzunehmen.

6. Verfahren nach Anspruch 1, wobei das Gehäuseteil (12) durch Positionieren des ersten Satzes elektrischer Kontakte (10) in einem Stützteil (24) und Überformen des Stützteils (24) erstellt wird, um den ersten Satz elektrischer Kontakte (10) an dem Stützteil zu befestigen.

7. Verfahren nach Anspruch 6, wobei das Stützteil (24) Ausnehmungen (16) aufweist, die geeignet sind, den zweiten Satz elektrischer Kontakte (18) aufzunehmen.

8. Verfahren nach einem der vorhergehenden Ansprüche, ferner umfassend einen Schritt des Positionierens eines dritten Satzes elektrischer Kontakte in dem Gehäuseteil (12) an dem ersten und zweiten Satz elektrischer Kontakte (10; 18) und des Überformens des dritten Satzes elektrischer Kontakte, um den dritten Satz elektrischer Kontakte an dem Gehäuseteil (12) zu befestigen.

9. Verfahren zum Herstellen einer Umwälzpumpe, umfassend die Schritte des:
- Herstellens eines Steuergeräts durch Umsetzen des Verfahrens nach einem der vorhergehenden Ansprüche und des
- Befestigens einer elektronischen Steuerplatine in dem Steuergerät, wobei die elektronische Steuerplatine in elektrisch leitendem Kontakt mit mindestens einem der Sätze elektrischer Kontakte (10; 18) steht, und des
- Befestigens des Steuergeräts auf einem Abschnitt der Umwälzpumpe.

10. Steuergerät für eine Umwälzpumpe, insbesondere für eine Umwälzpumpe mit Synchronmotor, das nach einem der Ansprüche 1 bis 8 hergestellt wird.

11. Umwälzpumpe mit Synchronmotor, umfassend einen Synchronmotor und ein Steuergerät des Synchronmotors nach dem Anspruch 10.

12. Umwälzpumpe nach Anspruch 11, wobei die elektronische Steuerplatine auf den elektrischen Kontakten (10; 18) durch Aufpressen der elektrischen Kontakte (10; 18) in Löcher, die in die elektronische Steuerplatine gebohrt sind, befestigt wird.

## Claims

1. A method for manufacturing a control box for a circulator pump, particularly for a circulator pump using a synchronous motor, comprising the steps of:
a) producing a casing part (12) on which a first set of electrical contacts (10) is fixed and a second set of electrical contacts (18) is pre-positioned;
b) securing the second set of electrical contacts (18) relative to the casing part (12) by insert molding.

2. The method of claim 1, wherein the casing part (12) is formed by insert molding of the first set of electrical contacts (10).

3. The method of claim 2, wherein the casing part (12) obtained by insert molding of the first set of electrical contacts (10) includes receptacles (16) adapted to receive the second set of electrical contacts (18).

4. The method according to claim 2 or 3, wherein after the formation of the casing part (12), a support member (24) having receptacles (16) adapted to receive the second set of electrical contacts (18) is formed in the casing part (12), in particular by molding.

5. A method according to claim 2 or 3, wherein after foiming the casing part, a support part (24) having receptacles (16) adapted to receive the second set of contacts (18) is arranged in the casing part (12).

6. The method of claim 1, wherein the casing part (12) is formed by placing the first set of electrical contacts (10) in a support part (24) and insert molding of the support part (24) in order to secure the first set of electrical contacts (10) relative to the support part.

7. The method of claim 6, wherein the support part (24) includes receptacles (16) adapted to receive the second set of electrical contacts (18).

8. The method according to any preceding claim, further comprising a step of placing in relation to the first and second sets of electrical contacts (10; 18), a third set of electrical contacts in the casing part (12), and insert molding the third set of electrical contacts in order to attach the third set of electrical contacts with respect to the casing part (12).

9. A method for manufacturing a circulator pump comprising the steps of:
- producing a control box using a method according to any preceding claim; and
- securing an electronic control circuit board inside the housing, the electronic control circuit board being in electrically conductive contact with at least one of the sets of electrical contacts (10; 18); and
- securing the unit onto a portion of the circulator pump.

10. A control box for a circulator pump, in particular for a synchronous motor circulator pump, manufactured according to any one of claims 1 to 8.

11. A synchronous motor circulator pump comprising a synchronous motor and a control box for the synchronous motor according to claim 10.

12. The circulator pump according to claim 11, wherein the electronic control circuit board is secured onto the electrical contacts (10; 18) by force fitting the electrical contacts (10; 18) into holes formed in the electronic control circuit board.
